**Europäisches Patentamt**

**European Patent Office**

**Office européen des brevets**

(19)

(11) Veröffentlichungsnummer : **0 204 137 B2**

(12)

# NEUE EUROPÄISCHE PATENTSCHRIFT

(45) Veröffentlichungstag der neuen Patentschrift :
**22.06.94 Patentblatt 94/25**

(51) Int. Cl.⁵ : **B65D 5/40,** B31B 1/60

(21) Anmeldenummer : **86105815.4**

(22) Anmeldetag : **26.04.86**

(54) **Verfahren zur Herstellung einer Packung für Flüssigkeiten mit Kantenschutz und Vorrichtung zur Durchführung des Verfahrens.**

(30) Priorität : **04.06.85 DE 3519955**

(43) Veröffentlichungstag der Anmeldung :
**10.12.86 Patentblatt 86/50**

(45) Bekanntmachung des Hinweises auf die
Patenterteilung :
**27.12.91 Patentblatt 91/52**

(45) Bekanntmachung des Hinweises auf die
Entscheidung über den Einspruch :
**22.06.94 Patentblatt 94/25**

(84) Benannte Vertragsstaaten :
**AT BE CH DE FR GB IT LI NL SE**

(56) Entgegenhaltungen :
**EP-A- 0 006 259
DE-A- 1 611 933**

(56) Entgegenhaltungen :
**DE-A- 2 102 001
DE-A- 3 217 156
DE-A- 3 327 462
FR-A- 1 403 123
US-A- 3 348 756**

(73) Patentinhaber : **Tetra Laval holdings & finance
S.A.
Avenue Général-Guisan 70
CH-1009 Pully (CH)**

(72) Erfinder : **Reil, Wilhelm
Altengassweg 16
D-6142 Bensheim 1 (DE)**

(74) Vertreter : **Weber, Dieter, Dr. et al
Weber, Dieter, Dr.,
Seiffert, Klaus, Dipl.-Phys.,
Lieke, Winfried, Dr.
Postfach 61 45
D-65051 Wiesbaden (DE)**

EP 0 204 137 B2

## Beschreibung

Die Erfindung betrifft ein Verfahren zur Herstellung einer Packung für Flüssigkeiten, die tubusförmige Seitenwandungen aus einem wenigstens einseitig mit Kunststoff beschichteten Trägermaterial, z.B. Papier, aufweist, wobei an den Seitenwandungen ein Boden mit Quersiegelnaht angebracht ist und die Seitenwände mit einer sich durch die Quersiegelnaht erstreckenden Längssiegelnaht innerhalb überlappender Ränder versehen sind und die Schnittkante des im Packungsinneren befindlichen Randes durch einen Kantenschutzstreifen abgedeckt ist, der um die Schnittkante des inneren Randes umgelegt und auf beiden Oberflächen des Randes aufgesiegelt ist, wobei der Kantenschutzstreifen auf die flachliegende, vorbewegte Bahn, deren Rand teilweise überlappend, in Längsrichtung derart aufgesiegelt wird, daß der über die Schnittkante überstehende Teil des Kantenschutzstreifens umgelegt und auf der Unterseite des Randes aufgesiegelt wird.

Die Schnittränder einer Bahn, aus der eine Flüssigkeitspackung der vorstehend genannten Art hergestellt werden kann, bilden bekanntlich eine Schnittkante, die nicht mit Kunststoff beschichtet ist sondern eine nach außen, die Poren freilegende Kantenoberfläche hat. Im Falle einer Fließmittelpackung kann in eine solche offene Kante Flüssigkeit eindringen, das Trägermaterial z.B. Papier, zum Quellen bringen und die Packung zerstören.

Um die Schnittkante abzudecken, ist es bereits bekannt, einen Kunststoffstreifen als Kantenschutz aufzusieglen. Hierzu wird ein Kunststoffstreifen etwa hälftig längs eines Bahnrandes auf einer Oberfläche aufgesiegelt. Danach wird die zunächst flachliegende Bahn zu einem Schlauch derart geformt, daß der Kunststoffstreifen im Schlauchinneren zu liegen kommt. Die überlappenden Ränder werden unter Herstellung der Schlauchlängssiegelnaht so miteinander verbunden, daß die Unterfläche des einen Randes auf die Oberfläche des gegenüberliegenden Randes des Schlauches aufgelegt und festgesiegelt wird. Gleichzeitig mit dem Erstellen der Längssiegelnaht wird der hälftig angesiegelte Kunststoffstreifen auf die Innenoberfläche desjenigen Bahnteiles aufgesiegelt, welcher den außen überlappenden Rand bildet. Durch die Siegelnaht des Kunststoffstreifens auf der genannten Innenfläche des außen überlappenden Randes wird die Schnittkante flüssigkeitsdicht abgedeckt.

Dieses bekannte Verfahren hat den Nachteil, daß beim Erstellen der Längssiegelnaht ein Bereich mit drei Papierlagen direkt neben einem solchen mit nur zwei Papierlagen angeordnet ist, wobei Versiegelungen auf beiden Seiten der Schnittkante zu erstellen sind. Hier ergeben sich Schwierigkeiten beim Versiegeln und damit auch bei der Dichtigkeit. Einerseits hat man durch Aufbringen von leistenförmigen Erhöhungen auf den Siegelbacken die unterschiedlichen Wandstärken (zwei Lagen/drei Lagen) auszugleichen versucht. Verständlicherweise ist die Herstellung und der Betrieb derartiger Werkzeuge kompliziert und aufwendig. Außerdem hat sich mit weiterem Nachteil gezeigt, daß der Wärmefluß von der heißen Siegelbacke nicht in gewünschtem Maße gleichmäßig an die zu erhitzende Stelle gelangt, so daß sich Dichtigkeitsprobleme ergeben haben. Dies wurde noch dadurch gesteigert, daß nicht genug Kunststoffmaterial an der kritischen Stelle längs der Schnittkante vorhanden ist, um einerseits eine gute Dichtigkeit zu besorgen und andererseits eine ausreichende Aufnahme der Zugkräfte zu gewährleisten. Ferner hat man einen weiteren Nachteil festgestellt, daß die Eindringtiefe der Wärme von der heißen Siegelbacke nicht immer genau definiert in der gewünschten Weise erreichbar ist. Da ein Innendorn beim Erstellen der Längssiegelnaht und dem Festlegen des Kunststoffstreifens als Kantenschutz nicht ohne weiteres eingesetzt werden kann, erfolgt die Schweißung bei flachgelegtem Packungsschlauch. Nach dem Erstellen der Längssiegelnaht muß der Schlauch aber wieder geöffnet werden können, damit die Packung füllbar ist. Es muß also dafür Sorge getragen werden, daß die Wärme und damit Erweichung der Kunststoffmassen nicht bis auf die gegenüberliegende durchgehende Seitenwandung gelangt. Zur Erfüllung dieser Voraussetzung hat man häufig Kompromisse bei der Dichtigkeit bzw. der guten Verschweißung der Längssiegelnaht gesucht. Eine einwandfreie Lösung konnte nicht gefunden werden.

Aus der DE-A-2 102 001 ist ein Verfahren zur Herstellung einer Packung bekannt, bei der ein Streifen aus wärmefestem Material, vorzugsweise Metall, U-förmig um eine zu schützende Kante umgelegt wird. Man wünscht ein nicht durch die Siegeltemperaturen zerstörbares Material für den Streifen, wobei Aluminium bevorzugt wird. Dieses hat plastische Verformungseigenschaften und springt nicht infolge innerer Elastizität nach dem Umformen zurück wie ein Streifen aus Kunststoff, der keine Eigensteifigkeit hat. Außerdem sollen bei dem bekannten Verfahren Schwierigkeiten beim Aufsiegeln, die sich durch unerwünschte Faltenbildung zeigen, durch die Verwendung von Metall als Kantenschutzstreifen vermieden werden. Die Erwärmung zur Befestigung des bekannten Metallstreifens erzeugt man bei dem bekannten Verfahren vorzugsweise durch Induktionserhitzung, weil dann die Wärme besonders fein dosiert werden kann. Das bekannte Verfahren weist ferner den Nachteil auf, daß das um die Schnittkante gelegte Metallband nur sehr aufwendig exakt abgeschnitten werden kann. Ferner ist die Art der Wärmezuführung von Bedeutung, die bei dem bekannten Verfahren durch die symmetrisch und gleichzeitig erfolgende Umformung des Metallbandes in U-Form nach der Verformung von außen über eine Induktionsspule eingeführt wird. Dies aber wäre bei Verwendung eines Kunststoffstreifens unmöglich.

Die bekannten Packungen und ihre Herstellungsverfahren haben nahezu alle den Nachteil, daß der Abdeckstreifen teuer und aufwendig ist, andererseits aber ohne seine Steifigkeit nicht zufriedenstellend gehandhabt und an den Packstoff herangebracht werden kann. Die Steifigkeit bekannter Kantenschutzstreifen erreicht man nur durch ein Trägermaterial, welches entweder die erwähnte Metallfolie oder gegebenenfalls Papier sein müßte, und häufig darf der Packungsinhalt wiederum nicht an die bloßliegende Kante des Abdeckstreifens gelangen. Aus diesem Grund werden bekannte Abdeckstreifen häufig in Form eines G oder der Zahl 6 gefaltet. Der Material- und Formungsaufwand ist dabei ersichtlich. Die Schwierigkeiten im kritischen Kreuzungspunkt zwischen Längs- und Quernaht einer Packung mit am Tubus angeformtem Faltboden verbieten die Verwendung des bekannten Kantenschutzstreifens.

Der Erfindung liegt daher die Aufgabe zugrunde, ein Verfahren zur Herstellung einer Packung mit den eingangs erwähnten Maßnahmen so weiterzubilden, daß eine U-förmige Anordnung auch eines Kunststoffstreifens, der keine eigene Steifigkeit hat, über die Schnittkante des innenliegenden Randes ohne übermäßigen Handhabungsaufwand möglich wird, ohne Dichtigkeitsprobleme in Kauf nehmen zu müssen, so daß die Herstellung der Packung einfacher und damit wirtschaftlicher wird. Außerdem soll eine Vorrichtung zur Durchführung dieses Herstellungsverfahrens geschaffen werden, die ebenfalls eine technisch einfache und ökonomische Herstellung der erwähnten Flüssigkeitspackungen erlaubt.

Für das Verfahren wird diese Aufgabe erfindungsgemäß dadurch gelöst, daß als Kantenschutzstreifen ein Kunststoffstreifen verwendet wird, dessen überstehender Teil im Bewegungstakt der Bahn punktweise auf dem Rand angesiegelt, danach die Bahn zum Schlauch geformt wird und anschließend die gesamte Fläche des im Querschnitt U-förmig umgelegten Kunststoffstreifens an die beiden überlappend gelegten Ränder angesiegelt wird.

Nach der Erfindung sind bekannte Techniken, wonach Kantenschutzstreifen auf den Rand einer flachliegenden Bahn längs aufgesiegelt werden, weiterentwickelt worden, und unter Verwendung des neuen Kunststoffstreifens und dessen U-förmiges Umlegen um die freie Schnittkante wird nicht nur ein guter Kantenschutz geschaffen, sondern es ist auch eine Packung mit einwandfreier Dichtigkeit herstellbar. Bei Verringerung des Materialaufwandes gegenüber bekannten Techniken wird eine größere Menge Kunststoffmaterial an kritischen Stellen vorgesehen, insbesondere wo sich Ränder überlappen und die Längssiegelnaht die Quersiegelnaht kreuzt. Durch das erfindungsgemäß vorteilhafte Verschmelzen und Zerfließen des Kunststoffes an den kritischen Stellen erreicht man ein günstigeres Verschweißen und damit eine bessere Dichtigkeit. Außerdem ergibt sich dadurch eine größere Widerstandskraft gegen die in der gefüllten Packung wirkenden Zugkräfte.

Mit Vorteil wird der teilweise aufgesiegelte Kunststoffstreifen um die gefährdete Schnittkante herumgelegt und zur Fixierung in dieser Kantenschutz-Gestalt auch auf der Unterseite des Randes aufgesiegelt; weil insbesondere nach dem Umlegen der Kunststoffstreifen auch auf der gegenüberliegenden Seite des Randes angesiegelt wird. Bei dem neuen Verfahren zeigt sich die vorteilhafte Anhäufig von Kunststoffmaterial am Längssiegelnahtbereich, wodurch sich mehr Ausgleichsmöglichkeiten für die fertige Längssiegelnaht bei großen Zugkräften der gefüllten Packung ergeben. Das Aufbringen des praktisch hauchdünnen Kunststoffstreifens, der an und für sich schwierig zu handhaben ist und keinesfalls durch Einbringen von Sicken stabilisiert werden kann, ist erfindungsgemäß mit einfachen Mitteln möglich, weil er lediglich im Querschnitt U-förmig umgelegt wird, dabei im Bewegungstakt der Bahn erst punktweise auf dem Rand des Tubusmaterials angeheftet und anschließend erst die gesamte Fläche des umgelegten Kunststoffstreifens angesiegelt wird. Das punktweise Aufsiegeln des Kunststoffstreifens bietet erfindungsgemäß den Vorteil, daß zwischen den Siegelflächen Bereiche für einen weiteren Eingriff von Werkzeugen auf den Rand mit dem Kunststoffstreifen geschaffen sind: beispielsweise der Eingriff von Versiegelungseinrichtungen zwischen Falteinrichtungen und umgekehrt. Selbstverständlich genügt das punktweise Aufsiegeln des Kunststoffstreifens nicht, da aber die Längssiegelnaht ohnehin im schlauchförmigen Zustand der Bahn erstellt wird, kann man diesen Versiegelungsvorgang gleichzeitig auch für die vollständige und dichtende Versiegelung des umgelegten Kunststoffstreifens verwenden.

Bei diesem Versiegeln, teilweise punktförmig und anschließend durchgehend über die ganze Packungshöhe beispielsweise, erreicht man ein günstiges Zerfließen der Kunststoffmasse, welche dann in die kritische Kanüle einfließen und dort für Dichtigkeit und kräftige Verbindung sorgen kann.

Zweckmäßig ist es gemäß der Erfindung auch, wenn zur Erstellung der Längssiegelnaht der Schlauch der Bahn zwischen Siegelbacken hindurchgeführt und der obere überlappende Rand auf dem unteren Rand mit dem Kunststoffstreifen vollständig verschweißt wird. Diese Maßnahmen sorgen für ein erleichtertes und genaueres Einwirken der Wärme aus dem Siegelbacken, insbesondere an derjenigen Stelle, an welcher der Kunststoff die besonders wichtigen Siegelungsnähte bildet. Durch ein günstiges Steuern der vom warmen Siegelbacken einwirkenden und einströmenden Wärme kann mit Vorteil dafür gesorgt werden, daß auf der gegenüberliegenden Seite des flach zusammengelegten Schlauches der Materialbahn keinerlei Schweißung erfolgt, so daß nach dem Erstellen der fertigen Längssiegelnaht mit den erwähnten Vorteilen der Schlauch zum Befüllen der Packung und Fertigstellen ohne weiteres geöffnet werden kann. Diese genauere Steuerung der Wärmeeinwirkung vom Siegelbacken auf die in Rede stehenden Stellen, wo beispielsweise wichtige Siegelungsnähte gebildet werden, wird mit Vorteil durch das vorstehend erwähnte punktförmige Aufsiegeln des Kunststoffstreifens auf der Unterseite des Randes und das anschließende Ansiegeln auf der gesamten Fläche erleichtert, denn das bedeutet eine Art Vorbehandlung des Kunststoffstreifens.

Durch die neue Längssiegelnaht mit der reichlicheren Kunststoffmenge im Überlappungsbereich und neben der Dichtnaht kann in weiterer vorteilhafter Weise die Querversiegelung in an sich bekannter Weise durch gegenüberliegende Siegelbacken erfolgen, ohne daß die Kreuzungsstelle zwischen Längs- und Quersiegelnaht kritisch wird.

Hinsichtlich der Vorrichtung zur Durchführung des Verfahrens, bei welcher Siegelbacken sowie Gegenbacken zum teilweisen Aufsiegeln des Kunststoffstreifens auf die Oberseite des Randes vorgesehen sind, wird die genannte Aufgabe erfindungsgemäß dadurch gelöst, daß in Förderrichtung der Bahn seitlich neben deren Förderweg ein länglicher, im Querschnitt U-förmiger Gleitschuh und Siegeleinrichtungen zum Anheften des Kunststoffstreifens an der Unterseite des Randes, dahinter Falt- und Siegeleinrichtungen für die Längssiegelnaht angeordnet sind, wobei der Gleitschuh eine Reihe von etwa quer zur Förderrichtung der Bahn herausstehende Umlegefinger aufweist und wenn zwischen je zwei Umlegefingern eine Siegeleinrichtung zum Anheften des Kunststoffstreifens angeordnet ist. Es wurde bereits erwähnt, daß Siegeleinrichtungen zum Aufsiegeln des Kunststoffstreifens auf die Oberseite des Bahnrandes bekannt sind. In Förderrichtung der Bahn wird nun erfindungsgemäß seitlich neben dem Förderweg der Bahn ein länglicher Gleitschuh angeordnet. Durch diesen erfolgt das Umlegen des Kunststoffstreifens im Querschnitt U-förmig derart, daß die ursprünglich freie Schnittkante nun vollständig mit reichlich Kunststoff abgedeckt und geschützt ist (Kantenschutz). Der Gleitschuh sorgt für das Umlegen des Kunststoffstreifens, und es sind Siegeleinrichtungen vorgesehen, um diesen an der Unterseite des Randes anzuheften. In Förderrichtung der Bahn weiterhin befinden sich dahinter die Falt- und Siegeleinrichtungen für die Längssiegelnaht.

Der Gleitschuh bewegt den Kunststoffstreifen aus der Bahnebene bei noch weiterhin flachliegender Bahn zunächst aus der Ebene heraus in U-Form und hält den noch nicht angesiegelten Kunststoffstreifen in dieser Form. Durch die Umlegefinger sind Bereiche zwischen je zwei benachbarten Umlegefingern freigelassen, in welche Siegelbakken durchgreifen können, die ein Anheften des Kunststoffstreifens auf der Unterseite des Randes besorgen. Zwar ist die Siegelfläche des Kunststoffstreifens auf der Unterseite des Randes zunächst nur punktförmig vorgesehen. Die Bahn kann jetzt aber ohne den Gleitschuh in beliebiger Weise gehandhabt werden, beispielsweise schlauchförmig gefaltet und zwischen die Siegelbacken für die Längssiegelnaht geführt werden. Zusammen mit der Erstellung der Längssiegelnaht wird auch der Kunststoffstreifen nun vollflächig angesiegelt.

Weil die Erstellung der Längssiegelnaht nur noch dort erfolgt, wo drei Papierlagen übereinanderliegen, braucht der Siegelbacken keinerlei Hökker, erhabene Leisten oder dergleichen aufweisen. Als Fläche interessiert nur diejenige der drei übereinanderliegenden Papierlagen, so daß der Siegelbacken bzw. der (im allgemeinen kalte) Gegenbakken eine ebene Oberfläche haben kann. Der Kunststoff, im allgemeinen Polyäthylen, zerläuft durch das Einfließen der Wärme vom heißen Siegelbakken und erstellt die Längssiegelnaht zwischen dem oberen und unteren Rand, welches die oberste und mittlere Papierschicht ist. Zwischen der mittleren und unteren Papierschicht erfolgt keinerlei Versiegelung. Die Wärme gelangt nicht dort hin, bzw. reicht die kurze Zeit keineswegs für eine Schweißverbindung aus. Damit kann der Schlauch nach der Längsversiegelung ohne weiteres zum Befüllen geöffnet werden.

Weitere Vorteile, bevorzugte Merkmale und Anwendungsmöglichkeiten der vorliegenden Erfindung ergeben sich aus der folgenden Beschreibung eines bevorzugten Ausführungsbeispieles in Verbindung mit den Zeichnungen. Es zeigen:

Figur 1      perspektivisch die Ansicht einer teilweise geschlossenen Packung, deren Seitenwandungen und Boden aus mit Kunststoff beschichtetem Papier bestehen,

Figur 2      eine Schnittansicht entlang der Linie II-II der Figur 1,

Figur 3      schematisch und abgebrochen die Ansicht der Papierbahn entgegen der Förderrichtung mit dem Kunststoffsteifen, der mittels der Siegeleinrichtung auf dem Rand aufgesiegelt wird,

Figur 4      schematisch eine Schnittansicht der Papierbahn in Förderrichtung, die seitlich im Gleitschuh verläuft,

Figur 5      eine Draufsicht auf Figur 4 von rechts nach links,

Figur 6      abgebrochen und schematisch die zum Schlauch zusammengelegte Papierbahn mit U-förmig angeheftetem Kunststoffstreifen zur Erstellung der Längssiegelnaht,

Figur 7      schematisch die Quersiegelbacken mit dem dazwischen angeordneten Papierschlauch mit Kan-

tenschutz vor dem Versiegeln,

Figur 8     im Querschnitt der zusammengedrückte Papierschlauch nach dem Erstellen der Längssiegelnaht,

Figur 9     abgebrochen schematisch eine vergrößerte Schnittdarstellung an der Stelle der überlappenden Ränder mit aufgelegtem Kunststoffstreifen und

Figur 10     ebenfalls abgebrochen, vergrößert und schematisch eine Schnittansicht ähnlich dem Mittelbereich in Figur 8, wobei die mit Kunststoffmaterial ausgefüllten Bereich hier allerdings leer gezeichnet sind, um die Zuordnung der Bezugszahlen besser zu erkennen.

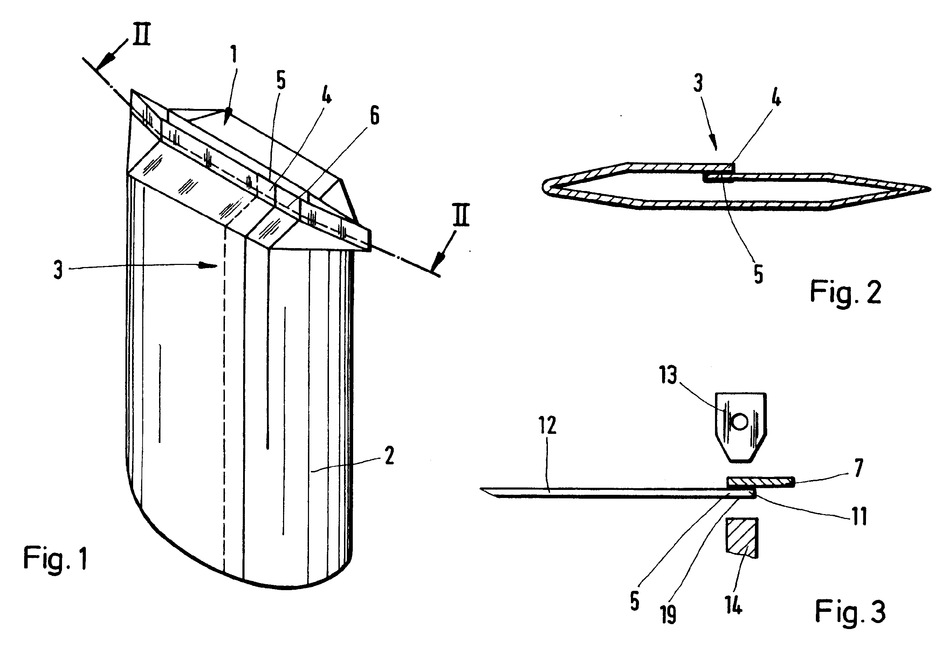

In Figur 1 ist nach dem Füllen und kurz vor dem Verschließen einer allgemein mit 1 bezeichneten Bodenwandung die Flüssigkeitspackung dargestellt, deren Seitenwände 2 und Bodenwandung 1 aus beidseitig mit Polyäthylen beschichtetem Papier bestehen. Die allgemein mit 3 bezeichnete Längssiegelnaht wird durch zwei einander überlappende Ränder 4 und 5 gebildet, von denen 4 der obere äußere Rand und 5 der untere innere Rand ist.

Nach dem Querversiegeln verläuft die Quersiegelnaht etwa längs der gestrichelten Linie 6 in Figur 1.

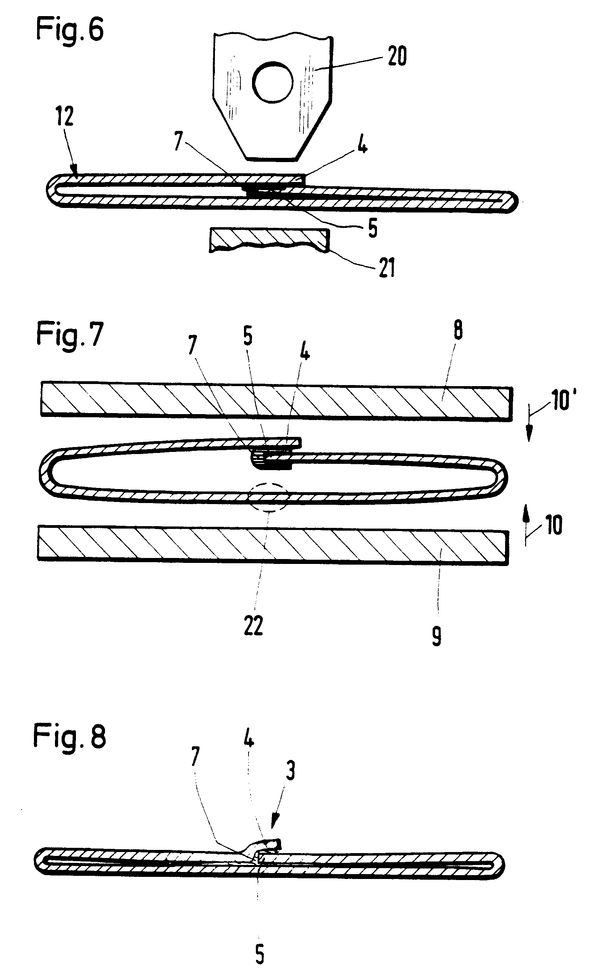

Figur 2 zeigt den Schnitt entlang der Linie II-II der Figur 1, d.h. durch diejenige Linie 6, welche später die Quersiegelnaht wird. In Figur 2 ist zunächst lediglich die Längssiegelnaht 3 fertiggestellt, die man in größerem Maßstab genauer aus dem Querschnitt der Figur 8 erkennt. Der schwarze Bereich ist der zerflossene Kunststoff des Kunststoffstreifens 7, der vor seinem Zerfließen im Zustand der Figur 7 gezeigt ist. Außerdem ist Figur 7 der Zustand vor dem Erstellen der Quersiegelnaht 6, d.h. bevor die Siegelbacken 8 und 9 in Richtung der Pfeile 10, 10' aufeinanderzugefahren sind.

Der Kantenschutz ist im fertigen Zustand durch den U-förmig um die freie Schnittkante 11 herumgelegten Kunststoffstreifen 7 gebildet.

Die Erstellung dieses Kantenschutzes erfolgt in der nachstehend beschriebenen Weise.

Gemäß Figur 3 wird zunächst die Bahn 12, die beidseitig mit Kunststoff beschichtet ist, entgegen der Blickrichtung des Betrachters taktweise so gefördert, daß der Rand 5 unter die Siegelbacke 13 und über die Gegenbacke 14 zu liegen kommt, während der Kunststoffstreifen 7 etwa hälftig auf den Band 5 aufgelegt ist. Das Aufsiegeln des Kunststoffstreifens 7 erfolgt dann in an sich bekannter Weise. Im fertigen Zustand ragt er ein Stück weit über die noch offene Schnittkante 11 hinaus (quer zur Förderrichtung 15).

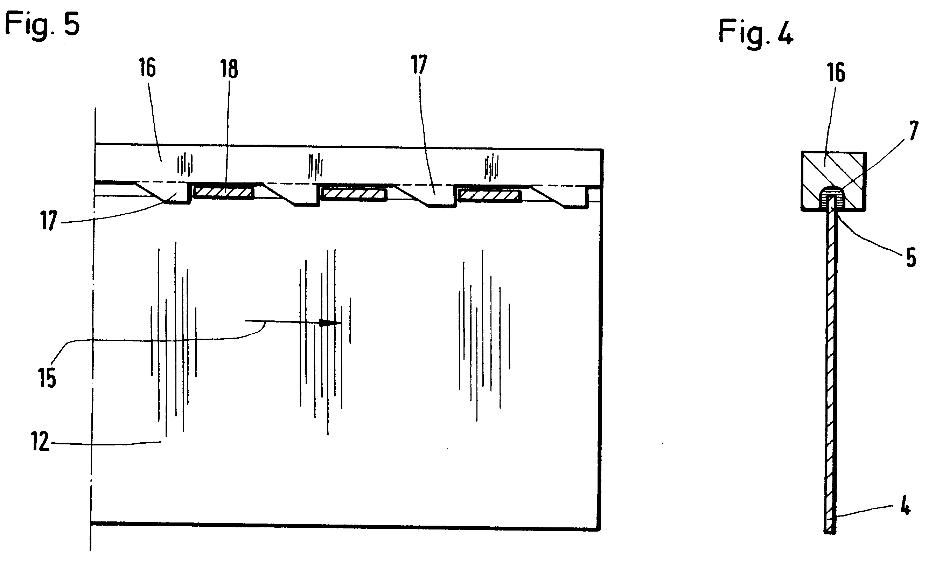

Gemäß Figur 5 wird die Papierbahn 12 in Pfeilrichtung 15 gefördert, d.h. gemäß Figur 4 in Blickrichtung des Betrachters.

Der in den Figuren 5 und 6 oben liegende Rand 5 der Bahn 12 wird in einen Gleitschuh 16 geführt, der eine Reihe von quer zur Förderrichtung 15 der Bahn 12 herausstehenden Umlegefingern 17 aufweist. Zwischen je zwei Umlegefingern 17 befindet sich ein Siegelbereich 18, in welchem die nicht dargestellten Siegeleinrichtungen eingreifen können und zum punktweisen Anheften des Kunststoffstreifens 7 an der Unterseite 19 (Figur 3) des Randes 5 vorgesehen sind.

Es ist jetzt der Zustand der Figur 7 erreicht, bei welchem der Kunststoffstreifen 7 U-förmig um den Rand 5 derart herumgelegt ist, daß die freie Schnittkante 11 vollständig mit Kunststoff abgedeckt und geschützt ist.

Zur Erstellung der Längssiegelnaht wird der Schlauch der Bahn 12 gemäß Figur 6 zwischen die Siegelbacken 20 und 21 geführt, wobei der obere überlappende Rand 4 auf den unteren Rand 5 mit dem Kunststoffstreifen 7, der nun oben (zwischen den Rändern 4 und 5) nur punktweise angeheftet ist, vollständig verschweißt wird. Das Material zerfließt im geschmolzenen Zustand gemäß Darstellung der Figur 8, ohne daß im unteren Bereich 22 (Figur 7) eine Versiegelung erfolgt, so daß zum Befüllen der Schlauch später ohne weiteres geöffnet werden kann.

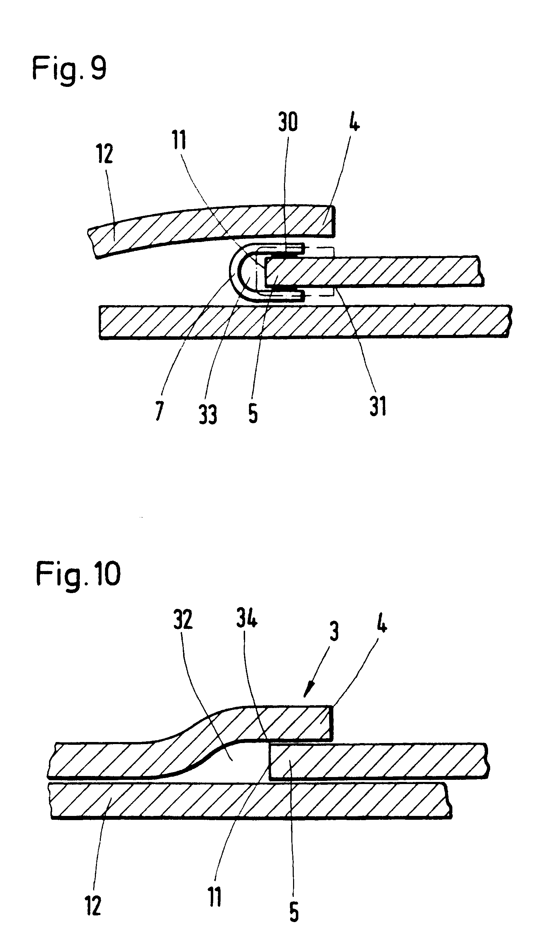

Figur 9 zeigt in vergrößertem Maßstab die andere Ausführungsform, bei welcher der Kunststoffstreifen 7 zwar ebenfalls U-förmig um die freie Schnittkante 11 herumgelegt ist, jedoch zwischen der Schnittkarte 11 und dem Streifen 7 ein Hohlraum 33 angeordnet ist. Zum besseren Vergleich ist gestrichelt die Auflage des Kunststoffstreifens nach der erst beschriebenen Ausführungsform gezeigt, wobei die äußeren Ränder weiter nach rechts reichen, wie beispielsweise mit der Bezugszahl 31 angedeutet ist. Mit der Bezugszahl 30 ist die jeweilige Siegelnaht zwischen der Oberfläche des Randes 5 und dem Kunststoffstreifen 7 gezeigt. Wird der Hohlraum 33 belassen, dann können die freien Kanten des Kunststoffstreifens 7 nicht mehr bis zur Stelle 31 reichen sondern liegen in der Darstellung der Figur 9 weiter nach links. Der ganze Kunststoffstreifen 7 ist damit weiter nach links gerückt.

Etwa bei 32 befindet sich die kritische Stelle für Dichtigkeit und Aufnahme der Zugkräfte, wie in Figur 10 gezeigt ist. Gerade hier aber befindet sich durch den Kunststoffstreifen 7 mit dem Hohlraum 33 genug Plastmaterial, daß eine feste und zweckmäßige Verschweißung stattfinden kann.

In Figur 10 ist ferner eine Ecke der Schnittkante 11 mit 34 bezeichnet. Es handelt sich hier um die längs der gesamten Schnittkante 11 verlaufende scharfe Kante, die sich selbstverständlich auch auf der gegenüberliegenden Seite unten befindet, nämlich an beiden Enden der Schnittkante 11. Diese scharfen Kanten sind vom Kunststoffstreifen mit Hohlraum 33 weiter entfernt, wie in Figur 9 mit durchgezogenen Linien gezeigt ist - als ohne Hohlraum, wie in Figur 9 mit gestrichelten Linien gezeigt ist. Der Fachmann erkennt sogleich, daß im Falle der Ausführungsform mit Hohlraum 33 die Verletzungsgefahr des Kunststoffstreifens 7 erheblich gemindert, wenn nicht ausgeschaltet ist.

Der Hohlraum kann gemäß Darstellung in Figur 9 zwischen der Schnittkante 11 am rechten Ende und der inneren Oberfläche des Kunststoffstreifens 7 am linken Ende des Hohlraumes 33 eine Breite von 0,5mm bis 2mm, vorzugsweise eine Breite von 1mm, haben.

## Patentansprüche

1. Verfahren zur Herstellung einer Packung für Flüssigkeiten, die tubusförmige Seitenwandungen (2) aus einem wenigstens einseitig mit Kunststoff beschichteten Trägermaterial, z.B. Papier, aufweist, wobei an den Seitenwandungen (2) ein Boden (1) mit Quersiegelnaht (6) angebracht ist und die Seitenwände (2) mit einer sich durch die Quersiegelnaht (6) erstreckenden Längssiegelnaht (3) innerhalb überlappender Ränder (4, 5) versehen sind und die Schnittkante (11) des im Packungsinneren befindlichen Randes (5) durch einen Kantenschutzstreifen abgedeckt ist, der um die Schnittkante (11) des inneren Randes (5) umgelegt und auf beiden Oberflächen des Randes (5) aufgesiegelt ist, wobei der Kantenschutzstreifen auf die flachliegende, vorbewegte Bahn (12), deren Rand (5) teilweise überlappend, in Längsrichtung derart aufgesiegelt wird, daß der über die Schnittkante (11) überstehende Teil des Kantenschutzstreifens umgelegt und auf der Unterseite des Randes (5) aufgesiegelt wird, dadurch gekennzeichnet, daß als Kantenschutzstreifen ein Kunststoffstreifen (7) verwendet wird, dessen überstehender Teil im Bewegungstakt der Bahn (12) punktweise auf dem Rand (5) angesiegelt, danach die Bahn (12) zum Schlauch geformt wird und anschließend die gesamte Fläche des im Querschnitt U-förmig umgelegten Kunststoffstreifens (7) an die beiden überlappend gelegten Ränder (4, 5) angesiegelt wird.

2. Verfahren nach Anspruch 1, dadurch gekennzeichnet, daß zur Erstellung der Längssiegelnaht (3) der Schlauch der Bahn (12) zwischen Siegelbacken (20, 21) hindurchgeführt und der obere überlappende Rand (4) auf dem unteren Rand (5) mit dem Kunststoffstreifen (7) vollständig verschweißt wird.

3. Vorrichtung zur Durchführung des Verfahrens nach Anspruch 1 oder 2, mit Siegel- (13) und Gegenbacken (14) zum teilweisen Aufsiegeln des Kunststoffstreifens (7) auf die Oberseite des Randes (5), dadurch gekennzeichnet, daß in Förderrichtung (15) der Bahn (12) seitlich neben deren Förderweg ein länglicher, im Querschnitt U-förmiger Gleitschuh (16) und Siegeleinrichtungen zum Anheften des Kunststoffstreifens (7) an der Unterseite des Randes (5), dahinter Falt- und Siegeleinrichtungen für die Längssiegelnaht (3) angeordnet sind, wobei der Gleitschuh (16) eine Reihe von etwa quer zur Förderrichtung (15) der Bahn (12) herausstehenden Umlegefingern (17) aufweist, und daß zwischen je zwei Umlegefingern (17) eine Siegeleinrichtung zum Anheften des Kunststoffstreifens (7) angeordnet ist.

## Claims

1. A method of manufacturing a packing for liquids, said packing comprising tube-shaped side walls (2) of a carrier material, e.g. paper, coated with synthetic plastics material on at least one side, whereby a bottom (1) with a transverse sealing seam (8) is provided on the side walls (2) and the side walls are provided with a longitudinal sealing seam (3) within overlapping edges (4, 5) and extending through the transverse sealing seam (8), the cut edge (11) of the edge (5) which is on the inside of the packing being masked by an edge-protecting strip which is folded around the cut edge (11) of the inner edge and sealed onto both surfaces of the edge (5), the edge-protecting strip being so sealed in a longitudinal direction onto the flat and forwardly fed web (12), partially overlapping its edge (5), that the part of the edge-protecting strip which protrudes beyond the cut edge (11) is folded over and sealed onto the underside of the edge (5), characterised in that as the edge-protecting strip a synthetic plastics strip (7) is used the projecting part of which is, in the movement rhythm of the web (12) sealed spotwise onto the edge (5) after which the web (12) is formed into a tube and then the entire surface of the synthetic plastics strip (7) which is folded over to a U-shaped cross-section is sealed onto the two overlapping edges (4, 5).

2. A method according to Claim 1, characterised in that to produce the longitudinal seam (3) the tube of the web (12) is passed between sealing jaws (20, 21) and the upper overlapping edge (4) is welded completely down onto the bottom edge (5) with the synthetic plastics strip (7).

3. An apparatus for carrying out the method according to Claim 1 or 2, having sealing jaws (13) and counter-jaws (14) for partially sealing the synthetic plastics strip (7) onto the top of the edge (5), characterised in that in the direction (15) of conveyance of the sheet (12) and laterally alongside its conveyance path there is an elongate cross-sectionally U-shaped shoe (16) and sealing means for attaching the synthetic plastics strip (7) to the underside of the edge (5), followed by folding and sealing means for the longitudinal sealing seam (3), the shoe (16) having a series of fold-over fingers (17) which protrude substantially transversely to the direction (15) of conveyance of the sheet (12) and in that disposed between every two fold-over fingers (17) there is a sealing means for attaching the synthetic plastics strip (7).

## Revendications

1. Procédé de fabrication d'un emballage pour liquides, qui comporte des parois latérales tubulaires (2) en un matériau support, par exemple le papier, enduit sur au moins une face d'une matière plastique, un fond (1), possédant un joint thermoscellé longitudinal (6), étant rapporté aux parois latérales (2), et les parois latérales (2) étant pourvues d'un joint thermoscellé longitudinal (3), traversant le joint thermoscellé transversal (6) et situé à l'intérieur de bords (4, 5) en chevauchement, la tranche de coupe (11) du bord (5) se trouvant à l'intérieur de l'emballage étant recouverte par une bande protège-tranche, laquelle est rabattue autour de la tranche de coupe (11) du bord intérieur (4) et est appliquée par thermoscellage sur les deux faces du bord (5), la bande protège-tranche étant appliquée par thermoscellage dans le sens longitudinal sur la feuille continue (12) posée à plat et se déplaçant vers l'avant, dont le bord est partiellement en chevauchement, et ce de telle sorte que la partie de la bande protège-tranche dépassant de la tranche de coupe (11) soit rabattue et appliquée par thermoscellage sur le côté inférieur du bord (5), caractérisé en ce qu'on utilise comme bande protège-tranche une bande plastique (7) dont la partie en dépassement est appliquée point par point sur le bord (5), en cadence avec la feuille continue (12), puis la feuille continue (12) est façonnée pour prendre la forme d'une gaine, puis la totalité de la surface de la bande plastique (7) rabattue de façon à prendre en coupe transversale la forme d'un U est rapportée par thermoscellage sur les deux bords (4, 5) disposés en chevauchement.

2. Procédé selon la revendication 1, caractérisé en ce que, pour réaliser le joint thermoscellé longitudinal (3), le tube de la feuille continue (12) est guidé entre des mâchoires de thermoscellage (20, 21), et que le bord supérieur en chevauchement (4) est entièrement soudé sur le bord inférieur (5), avec la bande plastique (7).

3. Appareillage pour la mise en oeuvre du procédé selon la revendication 1 ou 2, comportant une mâchoire (13) et une contre-mâchoire (14) destinées à appliquer partiellement, par thermoscellage, la bande plastique (7) sur la face supérieure du bord (5), caractérisé en ce que, dans le sens d'avance (15) de la feuille continue (12), latéralement à côté de sa trajectoire, sont disposés un patin de guidage (16) oblong et ayant en coupe transversale la forme d'un U, ainsi que des dispositifs de thermoscellage destinés à fixer la bande plastique (7) contre le côté inférieur du bord (5) et, en aval, des dispositifs de pliage et de thermoscellage destinés au joint thermoscellé longitudinal (3), le patin de guidage (16) comportant une série de doigts de rabattement (17), qui dépassent d'une manière approximativement transversale par rapport au sens d'avance (15) de la feuille continue (12), et en ce qu'entre chaque paire de doigts de rabattement (17) se trouve un dispositif de thermoscellage destiné à fixer la bande plastique (7).

Fig. 2

Fig. 3

Fig. 1

Fig. 5

16   18                    17

17

15

12

Fig. 4

16

7

5

4

EP 0 204 137 B2

Fig. 6

Fig. 7

Fig. 8

Fig. 9

Fig. 10